# EUROPÄISCHE PATENTSCHRIFT

(11) **EP 3 789 916 B1**
(45) Veröffentlichungstag und Bekanntmachung des Hinweises auf die Patenterteilung: **06.05.2026**
(21) Anmeldenummer: 20194402.2
(22) Anmeldetag: 03.09.2020
(51) Int. Cl.: G06V 10/22

(54) **VORRICHTUNG UND VERFAHREN ZUR ERFASSUNG VON BIOMETRISCHEN MERKMALEN EINES GESICHTS EINER PERSON**
DEVICE AND METHOD FOR DETECTING BIOMETRIC FEATURES OF A PERSON'S FACE
DISPOSITIF ET PROCÉDÉ DE DÉTECTION DES CARACTÉRISTIQUES BIOMÉTRIQUES D'UN VISAGE D'UNE PERSONNE

(30) Priorität: 09.09.2019 DE 102019124127
(43) Veröffentlichungstag der Anmeldung: 10.03.2021
(73) Patentinhaber: Bundesdruckerei GmbH, 10969 Berlin (DE)
(72) Erfinder: Rabeler, Uwe, 30453 Hannover (DE); Thater, Marcel, 30952 Ronnenberg (DE); Fox, Thomas, 30916 Isernhagen (DE); Maggioni, Christoph, 10961 Berlin (DE); Herrmann, Klaus, 30625 Hannover (DE); Hesse, Holger, 30655 Hannover (DE)
(74) Vertreter: Hentrich Patent- & Rechtsanwaltspartnerschaft mbB

(56) Entgegenhaltungen:
- DE-A1- 102014 109 682
- US-A1- 2019 188 470

## Beschreibung

Die Erfindung betrifft eine Vorrichtung zur Erfassung biometrischer Merkmale eines Gesichts einer Person. Sie umfasst ein Gehäuse oder eine anders geartete mechanische Konstruktion, in welchem eine eine erste Brennweite aufweisende Kamera zur Erfassung der biometrischen Merkmale und ein optischer Spiegel zur Faltung eines zwischen dem Gesicht der Person und der Kamera verlaufenden Strahlengangs angeordnet sind. Ferner weist sie eine Auswerte- und/oder Steuereinheit auf, die ausgebildet ist, drahtlos oder drahtgebunden in einer Kommunikationsverbindung mit der Kamera zu stehen. Die Erfindung betrifft außerdem ein Verfahren zur Erfassung der biometrischen Merkmale eines Gesichts einer Person.

Die Herausforderung bei Vorrichtungen zur Erfassung biometrischer Merkmale besteht darin, ein Bild zu erzeugen, welches möglichst frei von Abbildungsfehlern ist. Die biometrischen Merkmale des Gesichts einer Person sind deutlich zu erfassen. Dies spielt insbesondere eine Rolle im Bereich der manuellen, von Personen durchgeführten und automatisierten Gesichtserkennung bei Grenzkontrollen. Die automatisierten Systeme, ABC-Systeme (engl. "automated border control") werden häufig an Flughäfen eingesetzt, um die Identität einer Person zweifelsfrei feststellen zu können (in Deutschland: "EasyPASS"). Dabei wird das Passbild einer Person automatisch mit der Person selbst bzw. mit einem von der Person erfassten Bild verglichen. Die auftretenden Abbildungsfehler können zu Falschrückweisungen bei der automatisierten Kontrolle führen, was eine wiederholte automatische, oder eine manuelle, d.h. menschliche Überprüfung beispielsweise durch einen Grenzpolizisten erfordert. Diese Praxis wird als zeit- und kostenintensiv eingestuft und stellt darüber hinaus ein Sicherheitsrisiko dar.

Um die Anzahl solcher manueller Prüffälle oder die Anzahl an automatischen Falschrückweisungen zu reduzieren, ist es bereits bei der Erstellung des Passbildes notwendig, dass dieses eine hohe Bildqualität aufweist. Auch der automatisierte Abgleich bei ABC-Systemen ist mit einer hohen Bildqualität durchzuführen.

Vermehrt wird bei der Erstellung der Passbilder nicht mehr auf einen professionellen Fotografen, sondern auf Passbildautomaten zurückgegriffen, deren Bildqualität aber häufig schlecht ist aufgrund der Abbildungsfehler einerseits und aufgrund der fehlerhaften Haltung des Benutzers bzw. der häufig nicht optimalen Benutzerführung andererseits.

Eine Vorrichtung zur Erfassung biometrischer Merkmale einer Person ist beispielsweise aus der DE 10 2014 112 494 A1 bekannt. Die darin gezeigte Vorrichtung umfasst eine Kamera und zwei Spiegelanordnungen. Die erste Spiegelanordnung dient der Faltung eines zwischen dem zu erfassenden Gesicht der Person und der Kamera verlaufenden Strahlenganges. Die zweite Spiegelanordnung umfasst einen semitransparenten Spiegel, der Licht transmittiert zur Erfassung des Gesichts mittels der Kamera und der Licht reflektiert zur Spiegelung des Gesichts der Person.

Eine Vorrichtung zur Erfassung biometrischer Merkmale des Gesichts einer Person gemäß dem Oberbegriff des Anspruchs 1 ist beispielsweise der DE 10 2017 115 136 A1 der Anmelderin zu entnehmen. Die darin beschriebene Vorrichtung hat sich bereits als sehr zuverlässig herausgestellt und gut bewährt.

Eine solche Vorrichtung kann an einer räumlich beengten Grenzkontrollstelle, beispielsweise an Flughäfen, oder in engen Räumlichkeiten von Behörden Verwendung finden. Dennoch sollte gewährleistet sein, dass das Sicherheitspersonal einen möglichst weitreichenden Überblick über den Raum behalten kann, um etwaige Gefahren frühzeitig zu erkennen. Zudem variiert an Grenzkontrollstellen oder in Behördengebäuden die Beleuchtungssituation, so dass unterschiedliche Lichtverhältnisse bei der optischen Erfassung des Gesichts vorliegen können. Porträtfotos sind bei eingangs erwähnten Vorrichtungen entsprechend den Anforderungen der ISO 19794-5 (erste Edition, ausgegeben 2005) für Gesichtsbilder anzufertigen. Diese Norm fordert eine schattenfreie Ausleuchtung des Gesichts vor einem neutralen Hintergrund, der ebenfalls von Schatten freizuhalten ist. Eine spätere Freistellung des Gesichtsbilds mittels einer Software zur Bildbearbeitung ist nicht gestattet; wird also von der Norm untersagt.

Die DE 10 2014 109 682 A1 offenbart eine als Koffer gebildete manuell bedien- und verstellbare mobile Vorrichtung zur Erzeugung von biometrischen Bildern, wobei eine manuelle Anpassung an die Größe und Position der aufzunehmenden Person durch Verkippen des Kofferdeckels erfolgt.

Die Die US 2019/0188470 A1 beschreibt eine Vorrichtung zur Erkennung von Iriden. Dabei ist eine feststehende Kamera auf einen mittels einer Rotationseinrichtung um eine oder mehrere Rotationsachsen rotierbaren Spiegel gerichtet, um das Gesicht bereichsweise abtasten zu können.

Zusätzlich besteht das Bedürfnis, dass die Vorrichtung eingesetzt werden kann bei einem breiten Größenspektrum der Personen, um deren biometrischen Merkmale des Gesichts zu erfassen und ggfs. zu verarbeiten.

Ausgehend von dem bekannten Stand der Technik ist es die Aufgabe der vorliegenden Erfindung, eine verbesserte Vorrichtung und ein verbessertes Verfahren bereitzustellen.

Die die Vorrichtung betreffende Aufgabe wird mit einer Vorrichtung gemäß dem Merkmalsbestand des Anspruchs 1 und die das Verfahren betreffende Aufgabe wird mit einem Verfahren gemäß dem Merkmalsbestand des Anspruchs 11 gelöst. Vorteilhafte Ausgestaltungen mit zweckmäßigen Weiterbildungen der Erfindung sind in den abhängigen Ansprüchen angegeben.

Die Vorrichtung, die vorzugsweise als eine Zugangskontrollvorrichtung mit optischer Erfassungsmöglichkeit biometrischer Merkmale eines Gesichts einer Person ausgestaltet ist, zeichnet sich insbesondere dadurch aus, dass die Auswerte- und/oder Steuereinheit ausgebildet ist, eine im Gehäuse vorhandene Rotationseinrichtung zu veranlassen, den optischen Spiegel in Abhängigkeit einer erfassten Lage des Gesichts der Person derart zu verdrehen, dass der Strahlengang, mithin also die optische Achse, senkrecht auf einer vom Kinn zu einem zwischen den Augen liegenden Punkt des Gesichts verlaufenden oder parallel zu dieser ausgerichteten Gerade auftrifft. Erfindungsgemäß eine Übersichtskamera vorhanden, die Übersichtsbild erstellen kann, um in der Auswerte- und/oder Steuereinheit die Position und die Lage des Gesichts der Person zu bestimmen.

Damit ist der Vorteil verbunden, dass die Vorrichtung von Personen mit unterschiedlichster Größe bedienbar ist und auch dann Gesichtsbilder oder die biometrischen Merkmale erfasst werden können, wenn die Person ihre Sitzposition nicht selbstständig erhöhen kann oder wenn die Körpergröße nicht zu den technischen Möglichkeiten des eigentlichen Aufnahmesystems kompatibel ist. Zudem lassen sich verzerrungsfreie Portraitaufnahmen von Personen unabhängig von ihrer Körpergröße oder ihrer Sitzhöhe aufnehmen unter minimalem Einsatz mechanischer Komponenten, die eine besonders einfache Bedienung bereitstellt.

Mit der vorliegenden Erfindung lassen sich zudem Abbildungsfehler minimieren und Passbilder nach den Vorgaben der ISO 19794-5 (erste Edition, ausgegeben 2005) für Gesichtsbilder erstellen, wobei ein Mindestabstand zwischen der Kamera und dem Gesicht bzw. eine Mindestlänge des Strahlengangs von 120 Zentimetern (cm) eingehalten ist. Bevorzugt ist eine optische Weglänge zwischen der Kamera und dem Gesicht von zwischen 120 Zentimetern und 180 Zentimetern, weiterhin vorzugsweise zwischen 140 Zentimetern und 160 Zentimetern, insbesondere von ca. 150 Zentimetern.

Als biometrische Merkmale kommen beispielsweise die Farb- und/oder Formgebung der Iriden, der Augenabstand, die Stirnhöhe, die Form und Lage des Mundes, die Form und Lage der Nase und der Wangenknochen, die Anordnung der Blutgefäße etc. in Betracht.

Es hat sich als vorteilhaft erwiesen, wenn die Auswerte- und/oder Steuereinheit ausgebildet ist, eine in Abhängigkeit der Verdrehung hervorgerufene Trapezverzerrung der Aufnahme zu entzerren. Dies minimiert den konstruktiven Aufwand der Vorrichtung, da die Rotationseinrichtung dann ausschließlich den Spiegel verdrehen kann, um auch besonders große oder besonders kleine Personen erfassen zu können, während die anderen Komponenten der Vorrichtung in ihrer räumlichen Lage festgehalten sind.

Eine verzerrungsfreie Portraitaufnahme des Gerichts der Person lässt sich - erfindungsgemäß - auch dann betriebssicher erstellen, wenn die Rotationseinrichtung ausgebildet ist, außerdem die Kamera in Abhängigkeit der erfassten Lage des Gesichts zu verdrehen, insbesondere in einer gemeinsamen Baugruppe mit dem optischen Spiegel.

Zudem ist die Möglichkeit eröffnet, dass die Auswerte -und/oder Steuereinheit ausgebildet ist, drahtlos oder drahtgebunden in einer Kommunikationsverbindung mit einem digitalen Spiegel zu stehen, welcher ausgestaltet ist, das von der Kamera erfasste Bild anzuzeigen. Vorzugsweise ist die Rotationseinrichtung zusätzlich derart ausgebildet, außerdem den digitalen Spiegel in Abhängigkeit der erfassten Lage des Gesichts zu verdrehen. Damit ist gewährleistet, dass sich die abzulichtende Person stets selbst sehen kann und nicht aufgrund der Rotation der einzelnen Komponenten ihr eigenes Gesichtsbild nur undeutlich oder überhaupt nicht wahrnehmen kann.

Es hat sich zusätzlich als vorteilhaft erwiesen, wenn die Rotationseinrichtung ausgebildet ist, außerdem eine Beleuchtungseinrichtung in Abhängigkeit der erfassten Lage des Gesichts zu verdrehen, da dann eine schattenfreie Ausleuchtung des Gesichts von Personen unterschiedlichster Größe möglich ist. Das Verdrehen der Beleuchtungseinrichtung bringt außerdem den Vorteil mit sich, dass dadurch auch bewusst Schatten erzeugt werden können, um eine Täuschungserkennung durchzuführen.

Die Rotationseinrichtung kann ausgebildet sein, Rotationen mit einem einzigen Rotationsfreiheitsgrad auszuführen, wobei diese Rotation vorzugsweise zusätzlich durch Anschläge beidseits begrenzt ist, sodass die Rotationseinrichtung die einzelne Komponente oder die mehreren Komponenten zwischen den beiden Anschlägen beschränkt verschwenken kann.

**In** diesem Zusammenhang hat es sich als sinnvoll herausgestellt, wenn eine Rotation um eine senkrecht bezüglich dem Strahlengang orientierte Rotationsachse gegeben ist. Damit ist der Vorteil verbunden, dass Personen unterschiedlichster Größe mit der Vorrichtung aufgezeichnet werden können und deren biometrischen Merkmale des Gesichts erfassbar sind.

Um neben einer bloßen eindimensionalen Schwenkbewegung in vertikaler Richtung zusätzlich eine horizontale Schwenkbewegung zur Verfügung stellen zu können, hat es sich als sinnvoll erwiesen, wenn die Rotationseinrichtung ausgebildet ist, Rotationen mit genau zwei Rotationsfreiheitsgraden auszuführen, wobei eine senkrecht bezüglich dem Strahlengang orientierte erste Rotationsachse vorliegt, und wobei eine senkrecht bezüglich der ersten Rotationsachse orientierte zweite Rotationsachse vorliegt. Auch in horizontaler Richtung kann die Rotation durch zwei Anschläge begrenzt sein, so dass auch in horizontaler Richtung eine Schwenkbewegung zwischen den beiden Anschlägen möglich ist. Das Verschwenken erfolgt dabei also nicht nur in vertikaler, sondern auch in horizontaler Richtung, womit auch unterschiedlich breite Personen mittels der Vorrichtung erfassbar sind.

Außerdem ist es möglich, dass im Gehäuse eine Hubeinrichtung vorhanden ist, die ausgebildet ist, die Rotationseinrichtung und/oder den optischen Spiegel und/oder die Kamera in der horizontalen Lage, insbesondere parallel zur Gehäusefront, zu verstellen. Dadurch lässt sich ebenfalls sicherstellen, dass das Gesicht von unterschiedlich großen Personen von der Vorrichtung zentriert abgebildet wird. Es kann zur einfacheren Justage und zur Vermeidung von optischen Fehleinstellungen bevorzugt sein, wenn das Gehäuse selbst beispielsweise an einer Stange oder Wand horizontal und/oder vertikal (ggfs. motorisch) verstellbar angebracht ist.

Wenn eine Überwachung des Erfassungsvorgangs des Gesichts der Person nicht durch geschultes Personal erfolgen kann, so hat sich der Einsatz von Mitteln zur Täuschungserkennung bewährt. Es ist deshalb sinnvoll, wenn die Vorrichtung außerdem einen Sensor zur Täuschungserkennung umfasst.

Ein solcher Sensor kann beispielsweise als eine Wärmebildkamera gebildet sein, die vorzugsweise ausgebildet ist, ein Wärmebild eines Gesichtsbereichs der Person aufzunehmen, wobei ein Prozessor oder die Auswerte- und/oder Steuereinheit ausgebildet ist, eine örtliche Wärmeinhomogenität in einem vorbestimmten Erfassungsbereich des Wärmebilds zu detektieren. Alternativ oder ergänzend kann der Sensor als eine Nahinfrarot-Kamera (NIR-Kamera) gebildet sein, um die "presentation attack detection" (PAD) durchzuführen. Anhand eines durch eine NIR-Kamera aufgenommenen NIR-Bildes kann unterschieden werden, ob das Bild eine reale Person darstellt oder lediglich ein auf einem Wiedergabegerät (z.B. einem Smartphone oder einem Tablet) dargestelltes Abbild einer Person zeigt.

Im Rahmen der Erfindung ist es von Vorteil, wenn eine Übersichtskamera mit einer zweiten Brennweite vorgesehen ist, wobei die Länge eines zweiten Strahlengangs zwischen der Übersichtskamera und dem Gesicht der Person kleiner ist als die Länge des Strahlengangs zwischen der Kamera und dem Gesicht der Person. Während die Länge des ersten Strahlenganges zwischen dem Gesicht und der Kamera ca. 150 Zentimeter beträgt, liegt die Länge des zweiten Strahlengangs zur Übersichtskamera vorzugsweise in einem Bereich zwischen ca. 90 Zentimetern bis ca. 130 Zentimetern. Mit Hilfe der - erfindungsgemäßen - Übersichtskamera lässt sich ein Übersichtsbild erstellen und es können die Position und die Haltung des Kopfes der Person überprüft werden. Hierzu ist die Übersichtskamera vorzugsweise ebenfalls mittels einer Kommunikationsverbindung mit der Auswerte- und/oder Steuereinheit verbunden oder mit dieser verbindbar.

Weil der zweite Strahlengang bzw. die zweite optische Weglänge vom Gesicht zur Übersichtskamera kürzer ist als die Länge des Strahlengangs zwischen dem Gesicht und der Kamera, lässt sich durch die unterschiedlichen Abbildungseigenschaften des durch die Übersichtskamera und des durch die Kamera aufgenommenen Bildes eine Tiefeninformation ermitteln. Mit dieser Tiefeninformation und ggfs. unter Zuhilfenahme der Auswerte- und/oder Steuereinheit lässt sich dann eine dreidimensionale Information über das Gesicht bzw. den Kopf generieren. Anhand dieser dreidimensionalen Information kann im Rahmen der Täuschungserkennung festgestellt werden, ob das abzubildende Objekt dreidimensional oder zweidimensional ist; ob es sich also lediglich um ein Abbild einer Person und damit um keine "echte" Person handelt.

Mit den dreidimensionalen Daten kann aber auch eine Überprüfung des Abstandes des Kopfes von der Kamera bzw. der Übersichtskamera erfolgen. Die erste Brennweite der Kamera und die zweite Brennweite der Übersichtskamera können dabei vorzugsweise gleich oder unterschiedlich sein. Durch den Einsatz unterschiedlicher Brennweiten oder mittels unterschiedlicher Schärfe-Einstellungen der Kamera können unterschiedliche Referenzbilder mit unterschiedlichen Bildaufnahmeszenarien zur Personenidentifikation erzeugt werden.

Es hat sich als vorteilhaft erwiesen, wenn der optische Spiegel zumindest teildurchlässig und derart angeordnet ist, dass das durch den optischen Spiegel reflektierte Licht auf die Kamera und das durch den optischen Spiegel transmittierte Licht auf die Übersichtskamera gelenkt ist. Der optische Spiegel kann als semitransparenter Spiegel oder alternativ auch als Strahlteiler gebildet sein. Ist der optische Spiegel als Strahlteiler gebildet, so ist es insbesondere vorteilhaft ist, wenn der optische Spiegel als 50/50 Strahlteiler gebildet ist, bei welchem ein Anteil von 50 Prozent der Intensität des auftreffenden Lichts reflektiert und ein komplementärer Anteil von ebenfalls 50 Prozent der Intensität des auftreffenden Lichts durchgelassen wird. Alternativ kann der Strahlteiler auch Licht in einem bestimmten Wellenlängenbereich transmittieren und Licht eines anderen Wellenlängenbereichs reflektieren; oder die Strahlteilung erfolgt anhand der entsprechenden Polarisation des Lichtes. Durch eine Anordnung der Übersichtskamera auf einer der Gehäusefront abgewandten Seite des teildurchlässigen Spiegels kann außerdem ein kompakter Aufbau realisiert werden (aus der Sicht eines Benutzers ist dann die Übersichtskamera also hinter dem und auf Höhe des optischen Spiegels angeordnet). Darüber hinaus sind die Justage und die Höheneinstellung des Gehäuses und/oder der Kamera inkl. der Übersichtskamera vereinfacht.

Außerdem ist es bevorzugt, wenn im Gehäuse eine optische Brillendetektionseinheit vorgesehen ist. Brillen erzeugen bei Abbildungen häufig Reflexe, die die Qualität der Abbildung verschlechtern. Vorzugsweise umfasst die Brillendetektionseinheit eine UV-Lichtquelle zur Aussendung von Ultraviolettstrahlung in Richtung der Person und einen UV-Detektor zur Detektion von von der Person reflektierter bzw. gestreuter Ultraviolettstrahlung. In der Regel reflektieren (teilweise auch absorbieren) Brillengläser Licht im ultravioletten Bereich bis ca. 350 Nanometer (nm). Erst Licht mit größerer Wellenlänge und insbesondere sichtbares Licht wird von den Brillengläsern transmittiert. Diese Erkenntnis wird genutzt, um anhand der charakteristischen Remission des UV-Lichts von Brillengläsern festzustellen, ob die Person eine Brille trägt oder nicht. Wird eine Brille detektiert, so kann dann durch Anpassung der Beleuchtungseinheit die Entstehung von Reflexen verhindert werden. Alternativ kann z.B. über den als Bedieneinheit gebildeten digitalen Spiegel auch ein grafischer oder akustischer Hinweis ausgegeben werden, der die Person veranlasst, die Brille für den Erstellungsprozess des Bildes oder für den Identifikationsprozess abzunehmen. Die Brillendetektionseinheit kann alternativ oder ergänzend eine Time-of-flight-Kamera wie eine MS-Kinect^{®}-Kamera umfassen. Beispielsweise können hierbei mit Hilfe der Time-of-flight-Kamera die für Brillengläser vordefinierten Charakteristika im Tiefenprofil des Gesichtsbildes bestimmt oder erfasst werden. Solche Charakteristika können dabei insbesondere die beiden durch die Brillengläser hervorgerufenen nahezu ebenen Flächen beidseits der Nase sein.

Nach einer weiteren Ausgestaltung der Erfindung bildet der digitale Spiegel eine Bedieneinheit, die insbesondere als ein Touchscreen gestaltet ist, auf dem das durch die Kamera erfasste Bild anzeigbar ist. Somit kann die Person oder der Benutzer das durch die Kamera zu erfassende Bild am digitalen Spiegel, mithin am Display bzw. am Touchscreen, in Echtzeit betrachten, bevor die Aufzeichnung des Fotos oder des Passbildes erfolgt. Die Verdrehung des digitalen Spiegels mittels der Rotationseinrichtung und/oder ein vertikales Versetzen desselben nach unten oder nach oben zwingt die abzulichtende Person zu einer Kopfneigung, was Reflexionen durch Brillengläser im Gesichtsbild vorbeugt.

Die für die erfindungsgemäße Vorrichtung beschriebenen Vorteile und bevorzugten Ausführungsformen gelten auch für das erfindungsgemäße Verfahren, welches sich insbesondere durch die folgenden Schritte auszeichnet:
A) Detektieren einer sich vor dem Gehäuse befindenden Person,
B) Erfassung der Lage Gesichts der Person sowie einer zwischen dem Kinn und einem zwischen den Augen des Gesichts liegenden Punkts verlaufenden oder parallel zu dieser ausgerichteten Gerade,
C) Verdrehen des optischen Spiegels mittels der Rotationseinrichtung derart, dass der Strahlengang, mithin die optische Achse, senkrecht auf die Gerade auftrifft, und
D) Erfassen eines Gesichtsbilds des Gesichts der Person mittels der Kamera.

Mit diesem Verfahren ist der Vorteil verbunden, dass die Vorrichtung zur Erfassung von biometrischen Merkmalen des Gesichts von Personen mit unterschiedlichster Größe genutzt werden kann, so dass auch besonders kleine oder besonders große Personen die Vorrichtung nutzen können.

Um verzerrungsfreie Portraitaufnahmen von Personen unabhängig von ihrer Körpergröße oder ihrer Sitzhöhe erstellen zu können, hat es sich als sinnvoll erwiesen, wenn in Abhängigkeit der Verdrehung des optischen Spiegels eine dadurch entstandene Trapezverzerrung mittels der Auswerte- und/oder Steuereinheit entzerrt wird, womit dann ein verzerrungsfreies Gesichtsbild der Person vorliegt.

Um aber ein nachträgliches Entzerren zu vermeiden, hat es sich als sinnvoll erwiesen, wenn der optische Spiegel zusammen mit der Kamera mittels der Rotationseinrichtung in Abhängigkeit der erfassten Lage des Gesichts verdreht wird. Vorzugsweise erfolgt dabei das Verdrehen der Kamera und des optischen Spiegels als gemeinsame Baugruppe, wobei die relative Lage zwischen dem optischen Spiegel und der Kamera unverändert bleibt.

Zusätzlich ist die Möglichkeit eröffnet, dass die Rotationseinrichtung ausgebildet ist, außerdem einen digitalen Spiegel in Abhängigkeit der erfassten Lage des Gesichts zu verdrehen, an welchem das von der Kamera erfasste Bild ausgegeben oder angezeigt wird. Auch hierbei besteht die Möglichkeit, den digitalen Spiegel in einer gemeinsamen Baugruppe mit dem optischen Spiegel und/oder mit der Kamera zu verdrehen, sodass auch dessen relative Lage bezüglich der weiteren Komponenten festgelegt ist. Entsprechendes gilt für eine Beleuchtungseinrichtung, die ggfs. mit mehreren Beleuchtungseinheiten ausgestattet ist. Auch die Beleuchtungseinrichtung kann dann mittels der Rotationseinrichtung in Abhängigkeit der erfassten Lage des Gesichts der Person verdreht werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Im Folgenden wird die Erfindung an in der Zeichnung dargestellten Ausführungsbeispielen näher erläutert; es zeigen:
- Fig. 1: eine Anordnung mit einer Vorrichtung zur Erfassung biometrischer Merkmale eines Gesichts einer Person anhand einer schematischen Seitenansicht; und
- Fig. 2: eine Anordnung mit einer Vorrichtung zur Erfassung biometrischer Merkmale eines Gesichts einer Person ohne die Rückwand, wobei die Rotationseinrichtung ausgebildet ist, eine Baugruppe aus Kamera, optischem Spiegel und digitalem Spiegel gemeinsam zu verdrehen,
- Fig. 3: eine der Figur 2 entsprechende Darstellung mit verschwenkter oder verdrehter Baugruppe, und
- Fig. 4: eine der Figur 3 entsprechende Darstellung, wobei die Rotationseinrichtung ausgebildet ist, eine Baugruppe aus optischem Spiegel und digitalem Spiegel zu verdrehen.

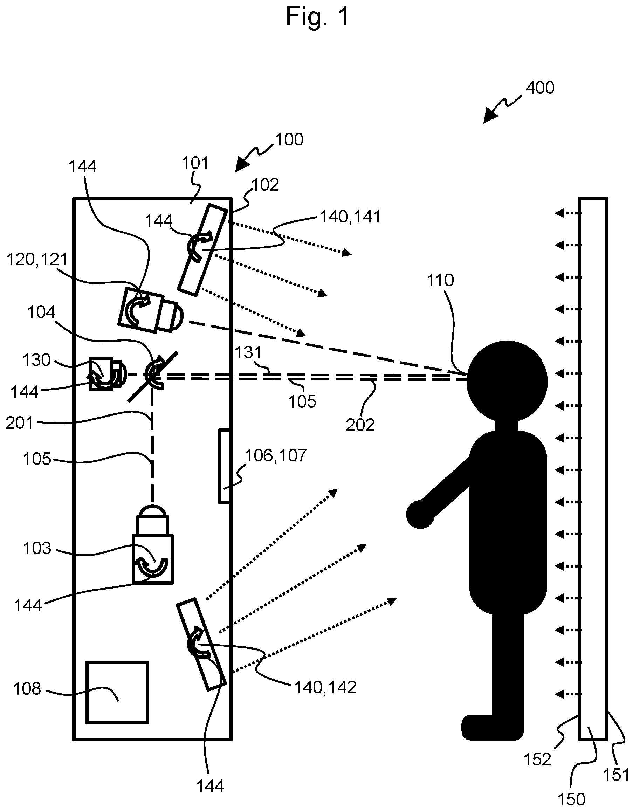

Figuren 1 bis 4 zeigen exemplarisch eine Anordnung 400 mit einer Vorrichtung 100 zur Erfassung biometrischer Merkmale eines Gesichts 110 einer Person. Die Vorrichtung 100 besitzt ein Gehäuse 101, welches eine der Person zugewandte Gehäusefront 102 aufweist. In dem Gehäuse 101 ist eine Kamera 103 zur Erfassung der biometrischen Merkmale des Gesichts 110 der Person angeordnet, die auf einen optischen Spiegel 104 gerichtet ist. Die Kamera 103 weist eine erste Brennweite auf. Die Blickrichtung der Kamera 103 ist im Wesentlichen parallel zu einer durch die Gehäusefront 102 definierten Ebene orientiert. Der ebenfalls im Gehäuse 101 angeordnete optische Spiegel 104 dient der Faltung eines zwischen dem Gesicht 110 der Person und der Kamera 103 verlaufenden, strichliert dargestellten Strahlengangs 105. Hierzu lenkt der optische Spiegel 104 das durch eine Gehäuseöffnung bzw. durch einen transparenten Abschnitt in der Gehäusefront 102 einfallende Licht auf die Kamera 103. Er ist im gezeigten Ausführungsbeispiel im Wesentlichen um 45 Grad gegenüber der durch die Gehäusefront 102 vorgegebenen Ebene geneigt angeordnet.

Außerdem ist ein digitaler Spiegel 106 vorhanden, der ausgebildet ist, das von der Kamera 103 erfasste Bild anzuzeigen. Um den Benutzer zu einer zumindest leicht geneigten Haltung des Kopfes zu zwingen, ist der digitale Spiegel 106 vertikal nach unten versetzt bezüglich des Strahlenganges 105 angeordnet.

Der digitale Spiegel 106 ist vorzugsweise als eine Bedieneinheit 107 ausgestaltet, die einen Touchscreen bzw. ein Touchpanel aufweisen kann und vorzugsweise mit einer Auswerte- und/oder Steuereinheit 108 in Form eines Computers verbunden ist. Alternativ weist die Bedieneinheit 107 auch einen eigenständigen Prozessor (bspw. einen Mikroprozessor) auf, vorzugsweise mit einem in dessen Speicher abgelegten und ausführbaren Echtzeitbetriebssystem (RTOS=real-time operating system) und einer oder mehrerer Anwendungen (Applications) zur Gesichtsbilderfassung. Zwischen der Bedieneinheit 107 und dem Computer ist im Betrieb der Vorrichtung 100 eine Kommunikationsverbindung wirksam, welche drahtgebunden oder drahtlos (bspw. Bluetooth, WLAN, NFC, etc.) gebildet sein kann. Die Auswerte- und/oder Steuereinheit 108 steht weiterhin in einer drahtgebundenen oder drahtlosen Kommunikationsverbindung mit der Kamera 103. Somit können die von der Kamera 103 erfassten Bilder, vorzugsweise in Echtzeit, mit Hilfe des Computers auf dem digitalen Spiegel 106, mithin auf dem Touchscreen ausgegeben werden.

Die Vorrichtung 100 weist zudem eine Beleuchtungseinrichtung 140 auf, die sich vorliegend in eine erste Beleuchtungseinheit 141 und in eine zweite Beleuchtungseinheit 142 untergliedert. Es ist aber die Möglichkeit eröffnet, dass mehr als zwei der Beleuchtungseinheiten 141, 142 vorhanden sind. Um eine schattenfreie Ausleuchtung des Gesichts 110 und bei Brillenträgern eine reflexionsfreie Aufnahme zu gewährleisten, ist die erste Beleuchtungseinheit 141 in einer ersten Richtung, insbesondere nach oben, vertikal versetzt bezüglich dem Strahlengang 105 angeordnet, wobei die zweite Beleuchtungseinheit 142 in einer von der ersten Richtung abweichenden zweiten Richtung, insbesondere nach unten, vertikal versetzt bezüglich dem Strahlengang 105 angeordnet ist. Die erste Beleuchtungseinheit 141 ist insbesondere vollständig oberhalb des optischen Spiegels 104 angeordnet. Die zweite Beleuchtungseinheit 142 ist insbesondere vollständig unterhalb des optischen Spiegels 104 angeordnet. Das von den Beleuchtungseinheiten 141, 142 emittierte Licht ist in der Figur durch punktierte Pfeile illustriert.

Die gezeigte Vorrichtung 100 weist außerdem eine Übersichtskamera 130 zur Aufzeichnung eines oder mehrerer Übersichtsbilder auf, welche eine zweite Brennweite aufweist. Die Länge eines zweiten Strahlengangs 131, d.h. einer zweiten optischen Weglänge zwischen der Übersichtskamera 130 und dem Gesicht 110 der Person ist dabei kleiner als die Länge des Strahlengangs 105 zwischen der Kamera 103 und dem Gesicht 110 der Person. Das Übersichtsbild lässt sich durch eine Gehäuseöffnung bzw. durch einen transparenten Abschnitt in der Gehäusefront 102 aufnehmen. Die Übersichtskamera 130 ist vorliegend auf der der Gehäusefront 102 abgewandten Seite des optischen Spiegels 104, bzw. hinter diesem angeordnet ist. Der optische Spiegel 104 ist aus diesem Grund zumindest teildurchlässig oder semitransparent gebildet und derart angeordnet, dass das durch den optischen Spiegel 104 reflektierte Licht auf die Kamera 103 und das durch den optischen Spiegel 104 transmittierte Licht auf die Übersichtskamera 130 gelenkt ist. Eine solche Anordnung der Übersichtskamera 130 führt zu einer sehr kompakten Vorrichtung 100. Es besteht jedoch die Möglichkeit, die Übersichtskamera 130 im Gehäuse 101 auf der der Kamera 103 abgewandten Seite, mithin oberhalb, des optischen Spiegels 104 anzuordnen, womit sich das Gehäuse 101 "schlank" halten lässt.

Anhand des mit der erfindungsgemäßen Übersichtskamera 130 erstellten Übersichtsbildes kann in der Auswerte- und/oder Steuereinheit 108 die Position und die Lage des Gesichts 110 der Person bestimmt werden. Hierzu steht die Übersichtskamera 130 in einer drahtgebundenen oder drahtlosen Kommunikationsverbindung mit der Auswerte- und/oder Steuereinheit 108. Anhand des Übersichtsbildes kann die Höhenlage des optischen Spiegels 104 angepasst werden, um den "Blick" der Kamera 103 - über den optischen Spiegel 104 - auf das Gesicht 110 der Person zu richten. Vorzugsweise werden anhand des Übersichtsbildes in der Auswerte- und/oder Steuereinheit 108 die Konturen des Gesichts 110 durch eine Randerkennung und/oder eine Farberkennung ermittelt. Nur wenn das Gesicht 110 vollständig abgebildet und zentriert ist, wird der nächste Schritt der Aufnahme eines Gesichtsbilds durch die Kamera 103 durchgeführt.

Mit Hilfe des Übersichtsbilds lässt sich aber auch der Abstand des Gesichts 110 der Person von der Übersichtskamera 130 und damit auch von der Kamera 103 bestimmen. Beispielsweise kann hierzu eine Triangulation genutzt werden, denn wenn mindestens zwei Referenzpunkte durch die Übersichtskamera 130 aufgenommen werden, deren jeweiliger Abstand zur Übersichtskamera 130 bekannt ist, so lässt sich daraus mittels Triangulation der Abstand des Gesichts 110 zur Übersichtskamera 130 ableiten. Aber auch eine als eine Time-of-Flight-Kamera gebildete Übersichtskamera 130 kann zur Abstandsbestimmung eingesetzt werden. Insgesamt wird dadurch gewährleistet, dass das Gesicht 110 der Person nicht zu nahe am optischen Spiegel 104 positioniert ist, was zu einem verfälschten Gesichtsbild führen könnte. Die Abstandsmessung kann zur Kontrolle auch nach der Aufnahme des Gesichtsbildes 110 durch die Kamera 103 erfolgen. Hierbei kann ausgenutzt werden, dass aufgrund der unterschiedlichen Längen der Strahlengänge 105, 131 bzw. der optischen Weglänge zwischen dem Gesicht 110 und der Übersichtskamera 130 und dem Gesicht 110 und der Kamera 103 die Abbildungseigenschaften der jeweiligen Bilder unterschiedlich sind, so dass anhand der unterschiedlichen Abbildungseigenschaften eine Tiefeninformation generiert werden kann. Zudem lässt sich feststellen, ob ein lebender Kopf abgebildet wird. Dies kann erreicht werden, indem mehrere Übersichtsbilder in Serie und/oder mehrere Gesichtsbilder in Serie aufgenommen werden, um zu überprüfen, ob unterschiedliche Gesichtsausdrücke und/oder unterschiedliche Augenpositionen abgebildet wurden. Dies erlaubt den Rückschluss auf einen lebenden Kopf.

Die Vorrichtung 100 kann als eine Kabine, bspw. in Form eines Selbstbedienungskiosks, ausgestaltet sein. Dieser bildet dann eine erfindungsgemäße Anordnung 400 mit einer Rückwand 150. Um qualitativ hochwertige Gesichtsbilder zur Verwendung in einem Pass erzeugen zu können, ist die der Gehäusefront 102 zugewandte Oberfläche der Rückwand 150 vorzugsweise einfarbig in einer neutralen Farbe gehalten. Alternativ kann die Anordnung 400 auch als ein Terminal zur Erfassung von biometrischen Daten einer Person ausgestaltet sein. Dieses Terminal kann eine Sendeeinheit und eine Empfangseinheit umfassen. Das erfasste Gesichtsbild lässt sich mittels der Sendeeinheit zu einer Behörde senden, wo ein Prüfmodul die Echtheit der biometrischen Daten im Gesichtsbild überprüft und wo ein Komparator die Daten mit in einer Datenbank abgelegten Werten auf Übereinstimmung abgleicht. Das Prüf- und/oder Komparatorergebnis kann dann an die Empfangseinheit des Terminals zurückgesendet werden. Somit lässt sich die Vorrichtung 100 nicht nur zur Erzeugung hochwertiger Passbilder sondern auch zum Identitätsabgleich nutzen.

Alternativ oder zusätzlich kann die insbesondere als Zugangskontrollvorrichtung ausgebildete Vorrichtung 100 auch derart ausgestaltet sein, dass diese eine Leseeinheit aufweist. Die Leseeinheit ist ausgebildet, die in einem Chip eines Personalausweises, eines Passes oder eines Dienstausweises, insbesondere kryptographisch abgesichert gespeicherten Daten auszulesen. Das Auslesen kann berührungslos, beispielsweise mittels Nahfeldkommunikation (NFC) erfolgen. Die auszulesenden Daten umfassen vorzugsweise Daten, insbesondere biometrische Daten zum Passbild der Person, so dass eine in der Vorrichtung 100 vorhandene Komparatoreinheit die optisch erfassten biometrischen Merkmale mit den aus dem Chip ausgelesenen Merkmalen vergleichen kann. Auch hiermit ist eine Identitätskontrolle ermöglicht.

Wenn die Vorrichtung 100 von der abzulichtenden Person selbst bedient werden kann, so hat sich die Einbindung eines in den Figuren ebenfalls gezeigten Sensors 120 zur Täuschungserkennung bewährt. Dieser Sensor 120 soll gewährleisten, dass Täuschungen beim Identifikationsvorgang maschinell erkannt und unterbunden werden. Vorliegend ist der Sensor 120 beispielhaft als eine Wärmebildkamera 121 gebildet. Dabei nimmt die Wärmebildkamera 121 ein Wärmebild eines Gesichtsbereichs der Person auf, wobei die Auswerte- und/oder Steuereinheit 108 ausgebildet ist, eine örtliche Wärmeinhomogenität in einem vorbestimmten Erfassungsbereich des Wärmebilds zu detektieren. Alternativ oder ergänzend kann der Sensor 120 als eine Nahinfrarot-Kamera (NIR-Kamera) gebildet sein, um die "presentation attack detection" durchzuführen. Anhand eines durch eine NIR-Kamera aufgenommenen NIR-Bildes kann unterschieden werden, ob das Bild eine reale Person darstellt oder lediglich ein auf einem Wiedergabegerät (z.B. einem Smartphone oder einem Tablet) dargestelltes Abbild einer Person zeigt. Denn über das NIR-Bild kann auch die Körperwärme oder die Blutzirkulation ermittelt werden, womit die NIR-Kamera ein hilfreiches Werkzeug für die "presentation attack detection" darstellt.

Zur Erzeugung von zumindest weitestgehend schattenfreien Aufnahmen, ist die gezeigte Rückwand 150 mit einer dem Gehäuse 101 zugewandten Vorderseite 152 gebildet, welche einen Lichtleiter umfasst, der ausgebildet ist, in ihn eingekoppeltes Licht über die Vorderseite 152 der Rückwand 150 auszukoppeln. Es ist zudem ein nicht näher dargestelltes Leuchtelement in Form von einer oder von mehreren LEDs vorhanden, welches mittels der Auswerte- und/oder Steuereinheit 108 ansteuerbar ist. Somit kann die Rückwand 150 beleuchtet werden, um einen schattenfreien Bildhintergrund im Gesichtsbild zu erzeugen. Das von der Rückwand 150 emittierte Licht ist ebenfalls durch punktierte Pfeile illustriert. Alternativ oder ergänzend kann die Rückwand 150 aber ausgebildet sein, um umgeschaltet zu werden zwischen einer Opak-Konfiguration, in welcher ein zumindest aus einem vorgegebenen Spektralbereich stammendes, auf eine Rückseite 151 der Rückwand 152 auftreffendes Licht absorbiert oder von der Rückseite 151 reflektiert wird, und einer Transmissions-Konfiguration, in welcher auf die Rückseite 151 der Rückwand 150 auftreffendes Licht zur Vorderseite 152 der Rückwand 150 transmittiert wird. Durch diese Ausgestaltung ist es beim Einsatz der Anordnung 400 in sicherheitsrelevanten Bereichen möglich, die Rückwand für das menschliche Auge durchsichtig zu schalten, so dass Sicherheitspersonal den sich hinter der Rückwand 150 befindenden Bereich einsehen können, wenn gerade kein Gesichtsbild mittels der Kamera 103 aufgezeichnet wird.

Der Abstand 201 zwischen der Kamera 103 und dem Spiegel 104 sowie der Abstand 202 zwischen dem optischen Spiegel 104 und dem Gesicht 110 sind dabei konstant zu halten. Deshalb wird bei einer vertikalen, d.h. entlang einer Parallelen zu der Gehäusefront 102 orientierten, Verstellung des Spiegels 104 zugleich die Kamera 103 vertikal um denselben Betrag verstellt. Hierzu kann eine vertikale Hubeinrichtung zur Verstellung der Kamera 103 und des optischen Spiegels 104 vorgesehen sein. **In** einer anderen Ausführungsform kann auch eine Hubeinrichtung zur vertikalen Verstellung des gesamten Gehäuses 101 vorgesehen sein, um den Spiegel 104 auf die Höhe des Gesichts 110 der zu erfassenden Person zu verstellen.

Es kann die Situation eintreten, dass das Gesicht einer Person erfasst werden soll, die besonders groß oder besonders klein ist, so dass die bloße vertikale Verstellung nicht mehr ausreicht, um ihr Gesichtsbild aufzuzeichnen. Um diesem Problem zu begegnen weist die Vorrichtung 100 vorliegend in ihrem Gehäuse 101 eine Rotationseinrichtung 144 auf, wobei die Auswerte und/oder Steuereinheit 108 ausgebildet ist die Rotationseinrichtung 144 zu veranlassen, den optischen Spiegel 104 in Abhängigkeit der erfassten Lage des Gesichts 110 der Person derart zu verdrehen, dass der Strahlengang 105, mithin die optische Achse senkrecht auf einer vom Kinn zu einem zwischen den Augen liegenden Punkt des Gesichts 110 verlaufenden oder parallel zu dieser ausgerichteten Gerade 146 auftrifft. Wie sich aus Figur 1 entnehmen lässt, können dabei mehrere Rotationseinheiten der Rotationseinrichtung 144 vorliegen, die jedes Bauteil einzeln (durch gebogene Pfeile gekennzeichnet) verdrehen kann. Es besteht jedoch auch die Möglichkeit, lediglich eine einzige Komponente zu verdrehen und die räumliche Lage der übrigen Komponenten dabei festzuhalten. Außerdem ist die Möglichkeit gegeben, zwei oder mehrere der Komponenten zu verdrehen, unter Beibehaltung der räumlichen Lage der übrigen Komponenten.

Somit ist also die Rotationseinrichtung 144 zusätzlich ausgebildet, neben dem optischen Spiegel 104 zusätzlich die Kamera 103 in Abhängigkeit der erfassten Lage des Gesichts 110 zu verdrehen. Ferner ist die Rotationseinrichtung 144 ausgebildet, neben dem optischen Spiegel 104 und gegebenenfalls der Kamera 103 außerdem den digitalen Spiegel 106 in Abhängigkeit der erfassten Lage des Gesichts 110 zu verdrehen. Zusätzlich kann die Rotationseinrichtung auf 144 ausgebildet sein, außerdem eine Beleuchtungseinrichtung 140 in Abhängigkeit der erfassten Lage des Gesichts 110 zu verdrehen. Die Rotation kann dabei auch begrenzt erfolgen, beispielsweise zwischen zwei Anschlägen, die ein Verschwenken der Komponenten um eine Rotationsachse senkrecht bezüglich der Papierebene der Figuren, d.h. senkrecht bezüglich dem Strahlengang 105 ermöglicht. Damit liegt für die Rotationseinrichtung 144 genau ein einziger Rotationsfreiheitsgrad, ggfs. durch Anschläge begrenzt, vor. **In** einer Weitergestaltung ist jedoch die Möglichkeit eröffnet, dass die Rotationseinrichtung 144 ausgebildet ist, Rotationen mit genau zwei Rotationsfreiheitsgraden auszuführen, wobei eine senkrecht bezüglich dem Strahlengang 105 orientierte erste Rotationsachse vorliegt, und wobei eine senkrecht bezüglich der ersten Rotationsachse orientierte zweite Rotationsachse vorliegt. Somit ist also eine Schwenkbewegung nicht nur vertikal, sondern auch horizontal ermöglicht. Auch hier kann eine Begrenzung der horizontalen Rotation mittels zwei Anschlägen Einsatz finden.

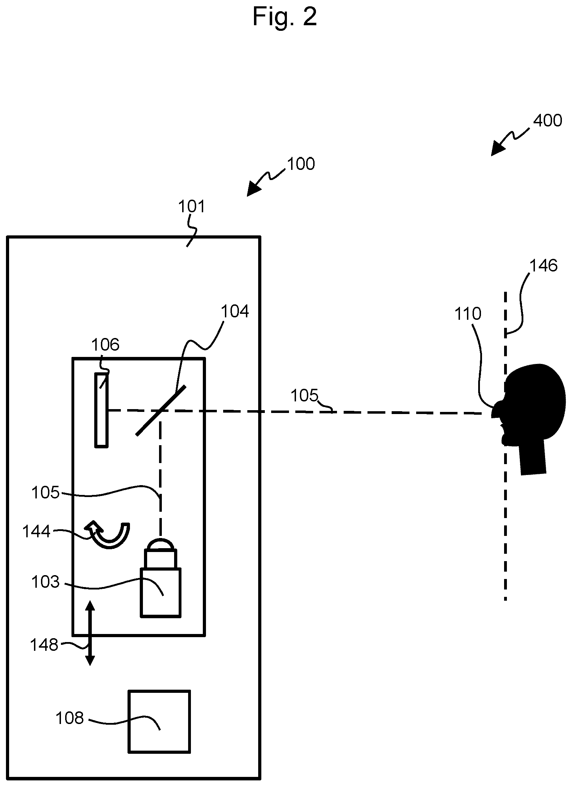

**In** Figur 2 ist der zur Erläuterung erforderliche Teil einer der Figur 1 entsprechenden Anordnung 400 gezeigt, wobei in diesem Beispiel die Kamera 103, der optische Spiegel 104 und der sich hinter dem optischen Spiegel 104 befindliche digitale Spiegel 106 in einer gemeinsamen Baugruppe zusammengefasst sind. Diese Baugruppe kann mittels der Rotationseinrichtung 144 insgesamt verdreht werden, um auch Personen, die sehr groß oder sehr klein sind, aufzeichnen zu können. Als weitere Gestaltungsmöglichkeit sieht diese Baugruppe eine Hubeinrichtung 148 vor, die ausgebildet ist, die Rotationseinrichtung 144 oder die Baugruppe selbst vertikal zu verstellen. Der Übersicht halber sind in Figur 2 nicht näher gezeigt: die Rückwand 150, die Beleuchtungseinrichtung 140 mit ihren Beleuchtungseinheiten 141, 142, die Übersichtskamera 130 und der Sensor 120.

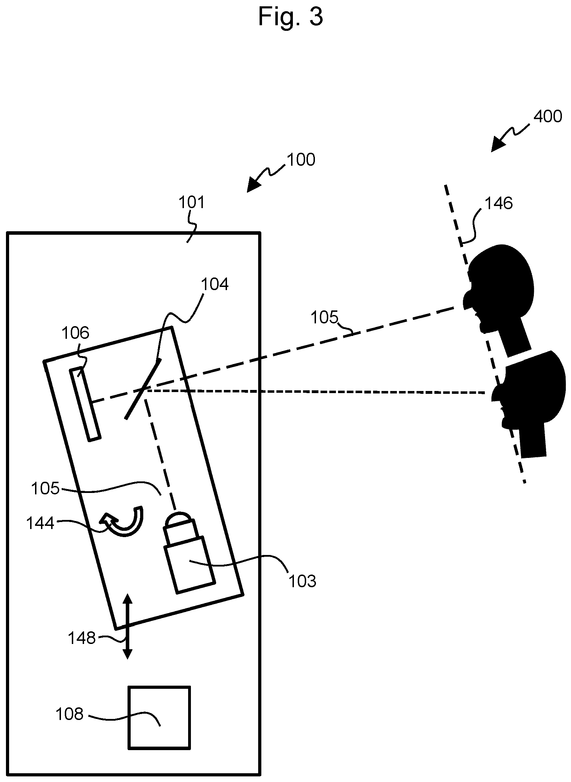

**In** Figur 3 ist als Szenario die Erfassung einer besonders großen Person illustriert, wobei die Rotationseinrichtung 144 die Kamera 103, den optischen Spiegel 104 und den digitalen Spiegel 106 gemeinsam verdreht hat, um die besonders große Person aufzeichnen zu können. Hierbei ist gewährleistet, dass der Strahlengang 105 im Wesentlichen senkrecht auf die Gerade 146 auftrifft, die typischerweise zwischen Kinn und einem sich zwischen den Augen des Gesichts 110 der Person befindlichen Punkts verläuft. Der Strahlengang 105 zur Kamera 103 trifft also auf die Gerade 146 (oder auf eine die Gerade 146 einschließende Ebene) in einem Schnittpunkt auf, der sich aufgrund der Rotationseinrichtung 144 im Wesentlichen auf einer (Teil-) Kreisbahn befindet oder bewegt. Mit anderen Worten ist also die Rotationseinrichtung 144 ausgebildet, den Strahlengang 105 kreisförmig zu bewegen oder - bei Vorliegen von Anschlägen - über einen Teilkreis zu verschwenken. Zur Verdeutlichung bzw. für eine Gegenüberstellung ist in Figur 3 mit kürzeren Strichen nochmals der in Figur 2 gezeigte "Ursprungszustand" des Strahlengangs 105 beim Erfassen einer "normal" großen Person illustriert.

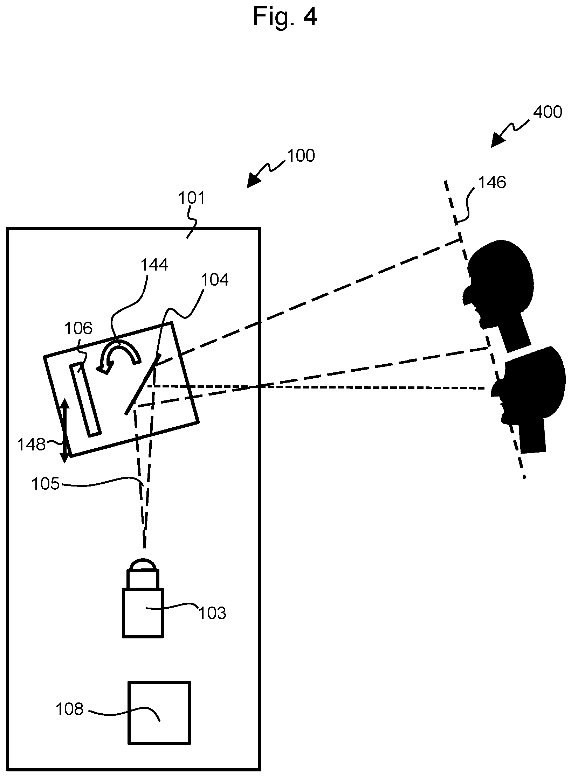

In Figur 4 ist der zur Erläuterung erforderliche Teil einer der Figur 1 entsprechenden Anordnung 400 gezeigt, wobei hier die Kamera 103 im Gehäuse 101 räumlich und damit auch in ihrer Ausrichtung festgelegt ist; die Kamera 103 also keiner Rotation unterliegt. Der Übersicht halber sind in Figur 4 wiederum nicht näher gezeigt: die Rückwand 150, die Beleuchtungseinrichtung 140 mit ihren Beleuchtungseinheiten 141, 142, die Übersichtskamera 130 und der Sensor 120. In Figur 4 sind lediglich der digitale Spiegel 106 und der optische Spiegel 104 zu einer Baugruppe zusammengefasst, die mittels der Rotationseinrichtung 144 verdrehbar ist, um eine besonders große oder besonders kleine Person aufzeichnen zu können. Aufgrund der festgelegten Lage der Kamera 103 und des verdrehten optischen Spiegels 104 entsteht eine Trapezverzerrung bei der Aufzeichnung des Gesichtsbilds. In dieser Konfiguration ist die Auswerte- und/oder Steuereinheit 108 aber zusätzlich ausgebildet, die hervorgerufene Trapezverzerrung im Gesichtsbild zu entzerren, wobei diese Entzerrung in Abhängigkeit der erfassten Lage des Gesichts 110 der Person oder in Abhängigkeit des Betrags der Verdrehung der Rotationseinrichtung 144 erfolgt. Die trapezoidale Verzerrung kann sowohl vertikal als auch horizontal auftreten, wobei die Auswerte- und/oder Steuereinheit 108 ausgebildet ist, eine Entzerrung in jeder Raumrichtung zur Erzeugung eines verzerrungsfreien Gesichtsbilds vorzunehmen.

Insgesamt zeichnet sich also die vorliegende Erfindung dadurch aus, dass Gesichtsbilder von Gesichtern 110 von Personen unterschiedlichster Größe erfasst werden können, wobei verzerrungsfreie Portraitaufnahmen gewährleistet sind. Die Aufnahme erfolgt dabei nahezu unabhängig von der Körpergröße oder der Sitzhöhe der Person. Außerdem ist die Anzahl an mechanischen Komponenten minimiert, was darüber hinaus eine einfache Bedienbarkeit der Vorrichtung 100 gewährleistet.

### BEZUGSZEICHENLISTE

- 100: Vorrichtung
- 101: Gehäuse
- 102: Gehäusefront
- 103: Kamera
- 104: Spiegel (optisch)
- 105: Strahlengang
- 106: Spiegel (digital)
- 107: Bedieneinheit
- 108: Auswerte- und/oder Steuereinheit
- 110: Gesicht
- 120: Sensor
- 121: Wärmebildkamera
- 130: Übersichtskamera
- 131: zweiter Strahlengang
- 140: Beleuchtungseinrichtung
- 141: erste Beleuchtungseinheit
- 142: zweite Beleuchtungseinheit
- 143: Beleuchtungselement
- 144: Rotationseinrichtung
- 146: Gerade
- 148: Hubeinrichtung
- 150: Rückwand
- 151: Rückseite
- 152: Vorderseite
- 201: Abstand
- 202: Abstand
- 400: Anordnung

## Patentansprüche

1. Vorrichtung (100) zur Erfassung biometrischer Merkmale eines Gesichts (110) einer Person, mit einem Gehäuse (101), in welchem eine eine erste Brennweite aufweisende Kamera (103) zur Erfassung der biometrischen Merkmale und ein optischer Spiegel (104) zur Faltung eines zwischen dem Gesicht (110) der Person und der Kamera (103) verlaufenden Strahlengangs (105) angeordnet sind, und mit einer Auswerte- und/oder Steuereinheit (108), die ausgebildet ist, in einer Kommunikationsverbindung mit der Kamera (103) zu stehen, **dadurch gekennzeichnet, dass** eine Übersichtskamera (130) in Kommunikationsverbindung mit der Auswerte- und/oder Steuereinheit (108) steht, und dass die Auswerte- und/oder Steuereinheit (108) ausgebildet ist, eine im Gehäuse (101) vorhandene Rotationseinrichtung (144) zu veranlassen, den optischen Spiegel (104) in Abhängigkeit einer von der Übersichtskamera (130) erfassten Position und Lage des Gesichts (110) der Person derart zu verdrehen, dass der Strahlengang (105) senkrecht auf einer vom Kinn zu einem zwischen den Augen liegenden Punkt des Gesichts (110) verlaufenden oder parallel zu dieser ausgerichteten Gerade (146) auftrifft, und dass die Rotationseinrichtung (144) ausgebildet ist, außerdem die Kamera (103) in Abhängigkeit der erfassten Lage des Gesichts (110) zu verdrehen.

2. Vorrichtung (100) nach Anspruch 1, **dadurch gekennzeichnet, dass** die Auswerte- und/oder Steuereinheit (108) ausgebildet ist, eine in Abhängigkeit der Verdrehung hervorgerufene Trapezverzerrung zu entzerren.

3. Vorrichtung (100) nach Anspruch 1 oder 2, **dadurch gekennzeichnet, dass** die Kamera (103) und der optische Spiegel (104) in einer gemeinsamen Baugruppe zusammengefasst sind, und dass die Rotationseinrichtung (144) ausgebildet ist, die Baugruppe als solche zu verdrehen, wobei die relative Lage der Kamera (103) bezüglich des Spiegels (104) unverändert bleibt.

4. Vorrichtung (100) nach einem der Ansprüche 1 bis 3, **dadurch gekennzeichnet, dass** die Auswerte- und/oder Steuereinheit (108) ausgebildet ist, drahtlos oder drahtgebunden in einer Kommunikationsverbindung mit einem digitalen Spiegel (106) zu stehen, welcher ausgestaltet ist, das von der Kamera (103) erfasste Bild anzuzeigen, und dass die Rotationseinrichtung (144) ausgebildet ist, außerdem den digitalen Spiegel (106) in Abhängigkeit der erfassten Lage des Gesichts (110) zu verdrehen.

5. Vorrichtung (100) nach einem der Ansprüche 1 bis 4, **dadurch gekennzeichnet, dass** die Rotationseinrichtung (144) ausgebildet ist, außerdem eine Beleuchtungseinrichtung (140) in Abhängigkeit der erfassten Lage des Gesichts (110) zu verdrehen.

6. Vorrichtung (100) nach einem der Ansprüche 1 bis 5, **dadurch gekennzeichnet, dass** die Rotationseinrichtung (144) ausgebildet ist, Rotationen mit einem einzigen Rotationsfreiheitsgrad auszuführen.

7. Vorrichtung (100) nach Anspruch 6, **dadurch gekennzeichnet, dass** die Rotationseinrichtung (144) ausgebildet ist, eine Rotation um eine senkrecht bezüglich dem Strahlengang (105) orientierte Rotationsachse zu veranlassen.

8. Vorrichtung (100) nach einem der Ansprüche 1 bis 7, **dadurch gekennzeichnet, dass** die Rotationseinrichtung (144) ausgebildet ist, Rotationen mit genau zwei Rotationsfreiheitsgraden auszuführen, dass eine senkrecht bezüglich dem Strahlengang (105) orientierte erste Rotationsachse vorliegt, und dass eine senkrecht bezüglich der ersten Rotationsachse orientierte zweite Rotationsachse vorliegt.

9. Vorrichtung (100) nach einem der Ansprüche 1 bis 8, **dadurch gekennzeichnet, dass** eine im Gehäuse (101) angeordnete Hubeinrichtung (148) ausgebildet ist, die Rotationseinrichtung (144) in ihrer horizontalen Lage zu verstellen.

10. Verfahren zur Erfassung biometrischer Merkmale eines Gesichts (110) einer Person (110) mittels einer Vorrichtung (100) nach einem der Ansprüche 1 bis 9, die ein Gehäuse (101) umfasst, in welchem eine eine erste Brennweite aufweisende Kamera (103) zur Erfassung der biometrischen Merkmale und ein optischer Spiegel (104) zur Faltung eines zwischen dem Gesicht (110) der Person und der Kamera (103) verlaufenden Strahlengangs (105) angeordnet sind, und die eine Auswerte- und/oder Steuereinheit (108) aufweist, die ausgebildet ist, in einer Kommunikationsverbindung mit der Kamera (103) zu stehen, sowie mit einer im Gehäuse (101) vorhandenen Rotationseinrichtung (144),
umfassend die Schritte:
A) Detektieren einer sich vor dem Gehäuse (101) befindenden Person,
B) Erfassung der Lage und Position des Gesichts (110) der Person sowie einer zwischen dem Kinn und einem zwischen den Augen des Gesichts (110) liegenden Punkts verlaufenden oder parallel zu dieser ausgerichteten Gerade (146),
C) Verdrehen des optischen Spiegels (104) mittels der Rotationseinrichtung (144) derart, dass der Strahlengang (105) senkrecht auf die Gerade (146) auftrifft, und
D) Erfassen eines Gesichtsbilds des Gesichts (110) der Person mittels der Kamera (103),
wobei der optische Spiegel (104) zusammen mit der Kamera (103) mittels der Rotationseinrichtung (144) in Abhängigkeit der erfassten Lage des Gesichts (110) verdreht wird.

11. Verfahren nach Anspruch 10, **dadurch gekennzeichnet, dass** in Abhängigkeit der Verdrehung des optischen Spiegels (104) eine dadurch entstandene Trapezverzerrung mittels der Auswerte- und/oder Steuereinheit (108) entzerrt wird.

12. Verfahren nach Anspruch 10, **dadurch gekennzeichnet, dass** das Verdrehen der Kamera (103) und des optischen Spiegels (104) als gemeinsame Baugruppe erfolgt, wobei die relative Lage zwischen dem optischen Spiegel (104) und der Kamera (103) unverändert bleibt.

13. Verfahren nach einem der Ansprüche 10 bis 12, **dadurch gekennzeichnet, dass** die Rotationseinrichtung (144) ausgebildet ist, außerdem einen digitalen Spiegel (106) in Abhängigkeit der erfassten Lage des Gesichts zu verdrehen, an welchem das von der Kamera (104) erfasste Bild ausgegeben oder angezeigt wird.

## Claims

1. A device (100) for capturing biometric features of a person's face (110), comprising a housing (101) in which a camera (103) having a first focal length for capturing the biometric features and an optical mirror (104) for folding a beam path (105) running between the face (110) of the person and the camera (103) are arranged, and with an evaluation and/or control unit (108) which is designed to be in communication connection with the camera (103), **characterized in that** an overview camera (130) is in communication connection with the evaluation and/or control unit (108), and **in that** the evaluation and/or control unit (108) is designed to cause a rotation device (144) present in the housing (101) to rotate the optical mirror (104) in response to a position and orientation of the face (110) of the person detected by the overview camera (130) in such a way that the beam path (105) strikes perpendicularly a straight line (146) extending from the chin to a point on the face (110) located between the eyes or aligned parallel to this, and that the rotation device (144) is also designed to rotate the camera (103) depending on the detected position of the face (110).

2. The device (100) according to claim 1, **characterized in that** the evaluation and/or control unit (108) is designed to correct a trapezoidal distortion caused by the rotation.

3. The device (100) according to claim 1 or 2, **characterized in that** the camera (103) and the optical mirror (104) are combined in a joint assembly, and **in that** the rotation device (144) is designed to rotate the assembly as such, whereby the relative position of the camera (103) with respect to the mirror (104) remains unchanged.

4. The device (100) according to any one of claims 1 to 3, **characterized in that** the evaluation and/or control unit (108) is designed to be in wireless or in wired communication connection with a digital mirror (106) which is designed to display the image captured by the camera (103), and that the rotation device (144) is designed to also rotate the digital mirror (106) depending on the detected position of the face (110).

5. The device (100) according to any one of claims 1 to 4, **characterized in that** the rotation device (144) is designed to also rotate an illumination device (140) depending on the detected position of the face (110).

6. The device (100) according to any one of claims 1 to 5, **characterized in that** the rotation device (144) is designed to perform rotations with a single degree of rotational freedom.

7. The device (100) according to claim 6, **characterized in that** the rotation device (144) is designed to cause rotation about a rotation axis oriented perpendicular to the beam path (105).

8. The device (100) according to any one of claims 1 to 7, **characterized in that** the rotation device (144) is designed to perform rotations with exactly two degrees of rotational freedom, that there is a first axis of rotation oriented perpendicular to the beam path (105), and that there is a second axis of rotation oriented perpendicular to the first axis of rotation.

9. The device (100) according to any one of claims 1 to 8, **characterized in that** a lifting device (148) arranged in the housing (101) is designed to adjust the rotation device (144) in its horizontal position.

10. A method for capturing biometric features of a face (110) of a person (110) using a device (100) according to any one of claims 1 to 9, which comprises a housing (101) in which a camera (103) having a first focal length for capturing the biometric features and an optical mirror (104) for folding a beam path (105) extending between the face (110) of the person and the camera (103) are arranged, and which has an evaluation and/or control unit (108) that is designed to be in communication connection with the camera (103) and with a rotation device (144) present in the housing (101),
comprising the steps:
A) detecting a person located in front of the housing (101),
B) capturing the location and position of the face (110) of the person and a straight line (146) extending between the chin and a point lying between the eyes of the face (110) or aligned parallel to this,
C) rotating the optical mirror (104) by means of the rotation device (144) in such a way that the beam path (105) strikes the straight line (146) perpendicularly, and
D) capturing an image of the face (110) of the person using the camera (103),
wherein the optical mirror (104) is rotated together with the camera (103) by means of the rotation device (144) depending on the detected position of the face (110).

11. The method according to claim 10, **characterized in that**, depending on the rotation of the optical mirror (104), any trapezoidal distortion caused thereby is corrected by means of the evaluation and/or control unit (108).

12. The method according to claim 10, **characterized in that** the camera (103) and the optical mirror (104) are rotated as a joint assembly, whereby the relative position between the optical mirror (104) and the camera (103) remains unchanged.

13. The method according to any one of claims 10 to 12, **characterized in that** the rotation device (144) is designed to also rotate a digital mirror (106) in dependence on the detected position of the face, on which the image detected by the camera (104) is output or displayed.

## Revendications

1. Dispositif (100) de détection de caractéristiques biométriques d'un visage (110) d'une personne, avec un boîtier (101), dans lequel sont agencés une caméra (103) présentant une première distance focale pour la détection des caractéristiques biométriques et un miroir optique (104) pour la convolution d'une trajectoire des rayons (105) s'étendant entre le visage (110) de la personne et la caméra (103), et avec une unité d'évaluation et/ou de commande (108) qui est formée afin de se trouver dans une liaison de communication avec la caméra (103), **caractérisé en ce qu'**une caméra d'observation (130) est en liaison de communication avec l'unité d'évaluation et/ou de commande (108) et **en ce que** l'unité d'évaluation et/ou de commande (108) est formée afin d'inciter un dispositif de rotation (144) présent dans le boîtier (101) à tourner le miroir optique (104) en fonction d'une position et d'un emplacement détectés par la caméra d'observation (130) du visage (110) de la personne de telle manière que la trajectoire des rayons (105) soit incidente perpendiculairement à une droite (146) s'étendant du menton à un point du visage (110) se trouvant entre les yeux ou orientée parallèlement à celle-ci, et **en ce que** le dispositif de rotation (144) est formé afin de tourner en outre la caméra (103) en fonction de l'emplacement détecté du visage (110).

2. Dispositif (100) selon la revendication 1, **caractérisé en ce que** l'unité d'évaluation et/ou de commande (108) est formée afin d'égaliser une distorsion trapézoïdale suscitée en fonction de la rotation.

3. Dispositif (100) selon la revendication 1 ou 2, **caractérisé en ce que** la caméra (103) et le miroir optique (104) sont réunis dans un ensemble commun, et **en ce que** le dispositif de rotation (144) est formé afin de tourner l'ensemble en tant que tel, dans lequel l'emplacement relatif de la caméra (103) par rapport au miroir (104) reste inchangé.

4. Dispositif (100) selon l'une quelconque des revendications 1 à 3, **caractérisé en ce que** l'unité d'évaluation et/ou de commande (108) est formée afin de se trouver sans fil ou de manière filaire dans une liaison de communication avec un miroir numérique (106) qui est configuré afin d'afficher l'image détectée par la caméra (103), et **en ce que** le dispositif de rotation (144) est formé afin de tourner en outre le miroir numérique (106) en fonction de l'emplacement détecté du visage (110).

5. Dispositif (100) selon l'une quelconque des revendications 1 à 4, **caractérisé en ce que** le dispositif de rotation (144) est formé afin de tourner en outre un dispositif d'éclairage (140) en fonction de l'emplacement détecté du visage (110).

6. Dispositif (100) selon l'une quelconque des revendications 1 à 5, **caractérisé en ce que** le dispositif de rotation (144) est formé afin de réaliser des rotations avec un seul degré de liberté de rotation.

7. Dispositif (100) selon la revendication 6, **caractérisé en ce que** le dispositif de rotation (144) est formé afin de provoquer une rotation autour d'un axe de rotation orienté perpendiculairement à la trajectoire des rayons (105).

8. Dispositif (100) selon l'une quelconque des revendications 1 à 7, **caractérisé en ce que** le dispositif de rotation (144) est formé afin de réaliser des rotations avec précisément deux degrés de liberté de rotation, **en ce qu'**un premier axe de rotation orienté perpendiculairement à la trajectoire des rayons (105) se présente, et **en ce qu'**un second axe de rotation orienté perpendiculairement au premier axe de rotation se présente.

9. Dispositif (100) selon l'une quelconque des revendications 1 à 8, **caractérisé en ce qu'**un dispositif de levage (148) agencé dans le boîtier (101) est formé afin de déplacer le dispositif de rotation (144) dans son emplacement horizontal.

10. Procédé de détection de caractéristiques biométriques d'un visage (110) d'une personne (110) au moyen d'un dispositif (100) selon l'une quelconque des revendications 1 à 9, qui comprend un boîtier (101), dans lequel sont agencés une caméra (103) présentant une première distance focale pour la détection des caractéristiques biométriques et un miroir optique (104) pour la convolution d'une trajectoire des rayons (105) s'étendant entre le visage (110) de la personne et la caméra (103), et qui présente une unité d'évaluation et/ou de commande (108) qui est formée afin de se trouver dans une liaison de communication avec la caméra (103), ainsi qu'avec un dispositif de rotation (144) présent dans le boîtier (101), comprenant les étapes suivantes :
A) la détection d'une personne se trouvant devant le boîtier MOII
B) la détection de l'emplacement 2 et de la position du visage (110) de la personne ainsi qu'une droite (146) s'étendant entre le menton et un point se trouvant entre les yeux du visage (110) ou parallèlement à celle-ci,
C) la rotation du miroir optique (104) au moyen du dispositif de rotation (144) de telle manière que la trajectoire des rayons (105) soit incidente perpendiculairement à la droite (146) et
D) la détection d'une image du visage (110) de la personne au moyen de la caméra (103),
dans lequel le miroir optique (104) est tourné conjointement avec la caméra (103) au moyen du dispositif de rotation (144) en fonction de l'emplacement détecté du visage (110).

11. Procédé selon la revendication 10, **caractérisé en ce qu'**une distorsion trapézoïdale apparue par là-même est égalisée au moyen de l'unité d'évaluation et/ou de commande (108) en fonction de la rotation du miroir optique (104).

12. Procédé selon la revendication 10, **caractérisé en ce que** la rotation de la caméra (103) et du miroir optique (104) est effectuée comme ensemble commun, dans lequel l'emplacement relatif entre le miroir optique (104) et la caméra (103) reste inchangé.

13. Procédé selon l'une quelconque des revendications 10 à 12, **caractérisé en ce que** le dispositif de rotation (144) est formé afin de tourner en outre un miroir numérique (106) en fonction de l'emplacement détecté du visage, au niveau duquel l'image détectée par la caméra (104) est émise ou affichée.
